# EUROPEAN PATENT APPLICATION

(11) **EP 1 160 731 A2**
(43) Date of publication of application: **05.12.2001**
(21) Application number: 01304742.8
(22) Date of filing: 30.05.2001
(51) Int. Cl.: G06T 9/00

(54) **Three-dimensional image compression method**

(30) Priority: 30.05.2000 US 583647
(71) Applicant: Point Cloud, Inc., Plymouth, MN 55441 (US)
(72) Inventor: Bodor, Robert, Eden Prairie, Minnesota 55346 (US); Cruikshank, Matthew R., Shorewood, Minnesota 55331 (US); Myers, Thomas B., Prior Lake, Minnesota 55372 (US)
(74) Representative: Beresford, Keith Denis Lewis

(57) **Abstract**

The present invention provides a system for efficiently representing and storing texture data used with polygon textures in representing three-dimensional objects. The system comprises determination of complexity of each polygon texture, combining textures of similar complexity into a two-dimensional composite texture image, and compressing each composite texture image. In some embodiments of the invention, the composite texture image is formed by resampling textures to a selected two-dimensional triangle, rotating triangles with respect to each other and packing the triangles close together to form a continuous composite texture image.

## Description

### Field of the Invention

The invention relates generally to compression of three-dimensional images, and more specifically to compressed storage of texture data to be mapped onto three-dimensional polygon meshes.

### Background of the Invention

As computers have become more powerful and their capabilities have been expanded by a growing range of hardware peripheral devices and software, use of computers to handle complex media has grown rapidly. Desktop personal computers are now often capable of handling streaming audio and video, and of rendering three-dimensional images in full motion. Typical applications for such functions often include games, but also include processing of information for purposes such as e-commerce, scientific computing, and record storage.

Three-dimensional images in particular are computationally intensive to render, and so have only recently become commonplace on desktop personal computers. A three-dimensional image typically comprises a mesh of polygons such as triangles which are rendered from the particular perspective of the viewer and which are then overlaid with a two-dimensional graphic image. The two-dimensional graphic images are sometimes referred to as textures, because in many instances overlaying the images appears to provide both color and texture to the polygons comprising the polygon mesh.

To render the three-dimensional image, both the detailed geometry of the polygon mesh and the texture overlay data must be created and stored. This stored data is then typically conveyed such as by transmission over a network or by storage on portable media such as a CD-ROM to a user, at which point the three-dimensional image is rendered and viewed. Because the data representing large or complex three-dimensional images can be relatively large, it is desirable to take steps to decrease the size of such data to reduce the amount of data that must be stored or transmitted via a network connection.

But, current data compression methods address only compression of single files of data, such as a single file containing a texture image or a single file containing multiple types of data such as texture and polygon data. Many common compression methods such as JPEG are most efficient when compressing data that is similar throughout or has repeating patterns, making compression of an entire texture map of a complex surface or compression of a texture and polygon mesh data in the same file less than optimal.

Separate compression of a texture for each face of the polygon mesh may result in less overall texture data being stored than if it were uncompressed, but has the disadvantages of resulting in a compressed texture file for every polygon face and does not take advantage of the likely similarities between various polygon textures in the rendered three-dimensional object. Also, independent compression of the texture applied to each polygon will typically result in compression of a very small image that does not have enough data or repetition within the data to make such compression efficient. Additionally, each independent file or object in a computer typically must use some minimum amount of memory and disk space when stored, and each file must be loaded and managed independently. Similarly, transmission of a large number of files over a network is very inefficient relative to transmission of the same data combined into a few files, again because of the protocol data and other management needed to transfer each individual file.

What is needed is a method of compressing data comprising a three-dimensional polygon mesh in a manner that provides a reduced overall data size and number of files required to represent a three-dimensional image. It is desirable that the compression method be designed to take advantage of the ability of many compression algorithms to optimally compress files comprising similar or repeating patterns and limit the number of independent files produced as a result of the compression.

### Summary of the Invention

The present invention provides a system for efficiently representing and storing texture data used with polygon textures in representing three-dimensional objects. The system comprises determination of complexity of each polygon texture, combining textures of similar complexity into a two-dimensional composite texture image, and compressing each composite texture image. In some embodiments of the invention, the composite texture image is formed by resampling textures to a two-dimensional right triangle, rotating triangles in 90 degree increments with respect to each other to facilitate efficiently packing the triangles together to form a continuous composite texture image.

### Brief Description of the Figures

Figure 1 shows an exemplary polygon mesh, consistent with the prior art.
Figure 2 shows an exemplary texture map, consistent with the prior art.
Figure 3 shows the exemplary texture map of Figure 2 applied to the exemplary polygon mesh of Figure 1, consistent with the prior art.
Figure 4 is a flowchart of a method of performing an embodiment of the present invention.
Figure 5 shows a composite texture image, consistent with an embodiment of the present invention.

### Detailed Description

In the following detailed description of sample embodiments of the invention, reference is made to the accompanying drawings which form a part hereof, and in which is shown by way of illustration specific sample embodiments in which the invention may be practiced. These embodiments are described in sufficient detail to enable those skilled in the art to practice the invention, and it is to be understood that other embodiments may be utilized and that logical, mechanical, electrical, and other changes may be made without departing from the spirit or scope of the present invention. The following detailed description is, therefore, not to be taken in a limiting sense, and the scope of the invention is defined only by the appended claims.

The present invention provides a method of compressing a three-dimensional texture-mapped polygon rendered image. The method comprises in one embodiment combining textures of similar complexity into a single two-dimensional composite texture image and compressing each composite texture image.

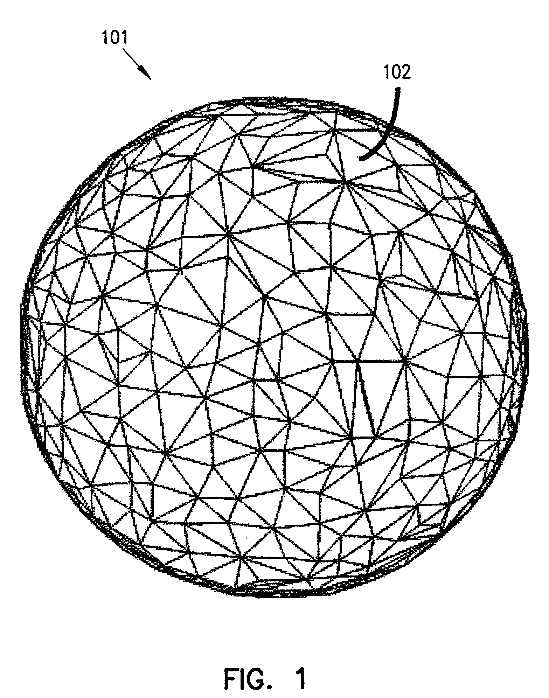

Figure 1 shows generally at 101 a mesh of adjoining polygons that form a three-dimensional surface. Larger meshes can be devised to approximate any three-dimensional object, and are commonly used for rendering three-dimensional objects from different perspectives in computer applications. Each polygon comprising part of a polygon mesh, such as polygon 102, is typically joined at its edges to other polygons. The adjacently joined polygons comprise a part of the three-dimensional object, as the adjoining polygons typically do not lie in the same plane. In this manner, an arbitrary three-dimensional object can be approximated by a number of adjoined polygons. The number of polygons needed to represent the three-dimensional object depends both on the complexity of the object and the desired spatial resolution.

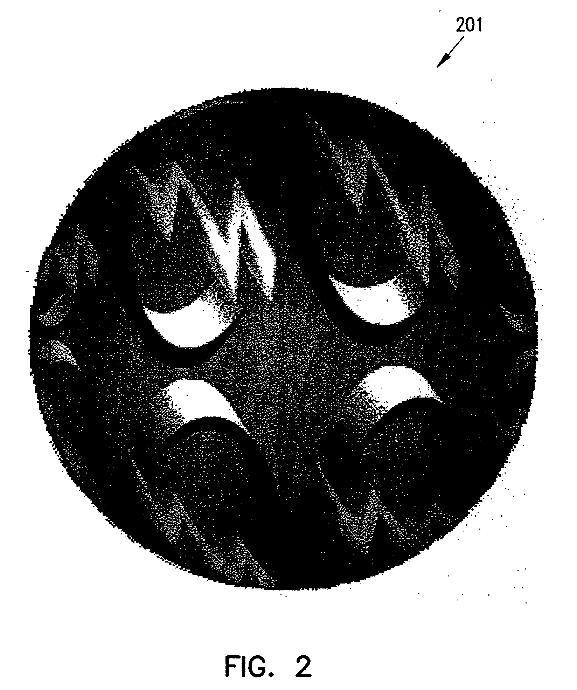

Figure 2 shows generally at 201 a detailed image applied to the polygon mesh of Figure 1, to give the appearance of a solid object with color and texture. Such an image is therefore often referred to as a texture map, indicating that the image is mapped onto the polygon mesh to provide the appearance of texture. The texture map in many embodiments is not a fanciful image such as is shown in Figure 2, but is of a color and texture designed to give a three-dimensional mesh a realistic appearance of an actual object. Examples include a woodgrain texture map to give the appearance of a wooden object, and an image of hair to give the appearance of a hairy three-dimensional object. The texture in many embodiments varies in color and texture throughout the texture map, enabling representation of complex and varying three-dimensional objects such as a person.

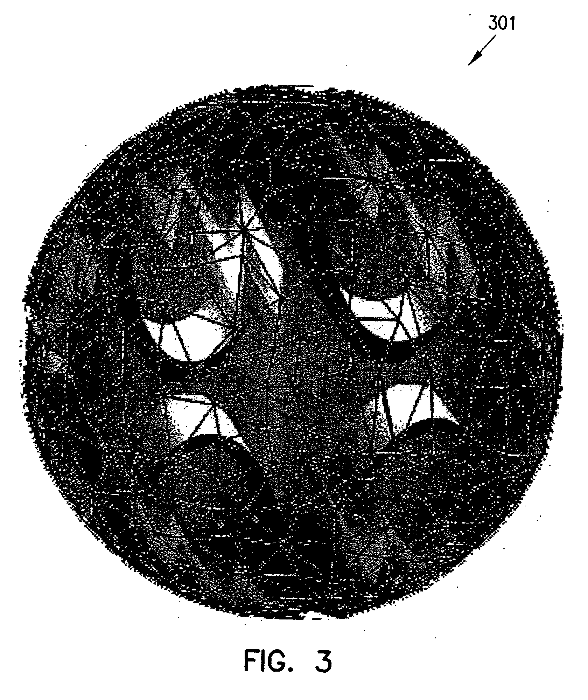

Figure 3 illustrates the texture map of Figure 2 superimposed on the polygon mesh of Figure 2, with the polygon edges highlighted to make them more visible. This representation shows how each polygon in the polygon mesh of the example shown has a specific portion of the texture map laid over it, such that each triangle of the polygon mesh has an associated two-dimensional triangular portion of the image map applied to it in rendering the three-dimensional image. The independent portions of the texture map applied to each of the polygons are often called "texels", and are typically stored independently in a standard image format. The texels are sometimes stored as compressed images, to facilitate faster transfer of the data and to decrease the amount of storage consumed by the data.

But, the large number of texels required to render complex three-dimensional objects often results in hundreds to thousands of individual texel files that must be independently stored, transmitted, and processed to render the object. Additional storage space is consumed in many computer storage systems that store data using allocated blocks of storage larger than a single byte, as extra bytes are likely to be required for half or more of the hundreds or thousands of individual files. For example, in an operating system where texel data of arbitrary size is stored in files that are sized in increments of 4k, an average of 2k of wasted space will be taken for each of the hundreds or thousands of texels stored to render a single object.

Similar problems can exist in communicating large numbers of files, in addition to the protocol requirements necessary to initiate and manage transfer of each individual file. One particular example where this problem is especially important is where network congestion, slow servers, or other factors cause relatively slow links within the Internet may prevent a consumer from using a site that requires such excessive transfer of individual files. Compression of the individual files may help somewhat, and is already incorporated where the texels are JPEG or otherwise encoded, but can be inefficient on texel files that have too little data in them to provide substantial data redundancy.

To solve the problems associated with multiple texel files and texel data that cannot be significantly compressed due to lack of redundancies, a novel texel storage and compression system is presented. The inventive solution comprises sorting and combining the texels into a significantly smaller number of files, and in further embodiments modifying the texels in the combination process to facilitate even more efficient compression.

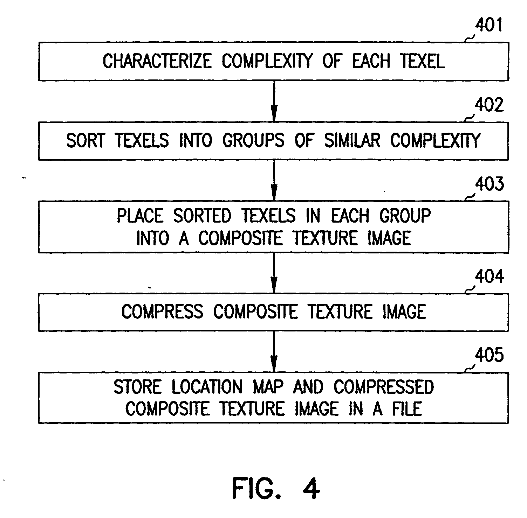

Figure 4 shows a flowchart of one embodiment of the invention. In this embodiment, each texel is analyzed and the complexity of each texel is characterized. Characterization of complexity at 401 comprises in various embodiments any combination of change of color, rate of change of color, resolution, size, degree of repetition, histogram, color pattern, and other image characteristics. Texels of like complexity are sorted into groups at 402. It is desirable that the texels in a single group have similar colors and patterns so that redundancies within each group are maximized, and that the texels within each group are similar in size, resolution, and complexity so that they can be efficiently placed at 403 without loss of resolution.

At 403, each group of sorted texels is placed into a composite texture image. Placing the texels comprises in various embodiments of the invention steps such as resampling the texels, sorting the texels by resolution, rotating and placing texels to form squares, and placing the formed square pairs of texels into the composite texture image. In some embodiments, texels are resampled if needed to force each texel into an isosceles right triangle shape.

In other embodiments, the texels are further sorted by shape and are not resampled into a right triangle, but are packed into the composite image in their original geometry. Such embodiments lose the efficiencies gained with resampling and efficiently packing the resampled texels, but do not cause the texel distortion inherent in the resampling process and so yield marginally better image clarity.

In further embodiments, the texels are also searched for texels that are essentially duplicates, such as different texels from an object of a solid color. These duplicate textures are removed, and a map or data record associates the removed textures with the remaining duplicate texture for use in rendering the object.

The composite texture image is then compressed at 404. In some embodiments, the texture image is compressed using a lossy compression algorithm compression level that is dependent on the complexity of the texels within the composite texture image. In such lossy compression embodiments, low complexity results in use of higher compression and high complexity results in use of lower compression to preserve detail and resolution. Compression in various embodiments is performed using compression schemes such as JPEG, GIF, LZW, PNG, or any other type of compression algorithm.

The compressed composite texture image is then stored in a file at 405, along with map data indicating the location and identity of each texel within the image. In alternate embodiments, the map data is stored in a file other than with the compressed composite texture image. The map achieves its function in some embodiments by identifying each texel and the vertices of each texel in the composite image map, along with the corresponding vertices of each texel within the corresponding polygon mesh. Such a map can then be used to resample and render the texels onto the proper locations on the polygon mesh in rendering the object.

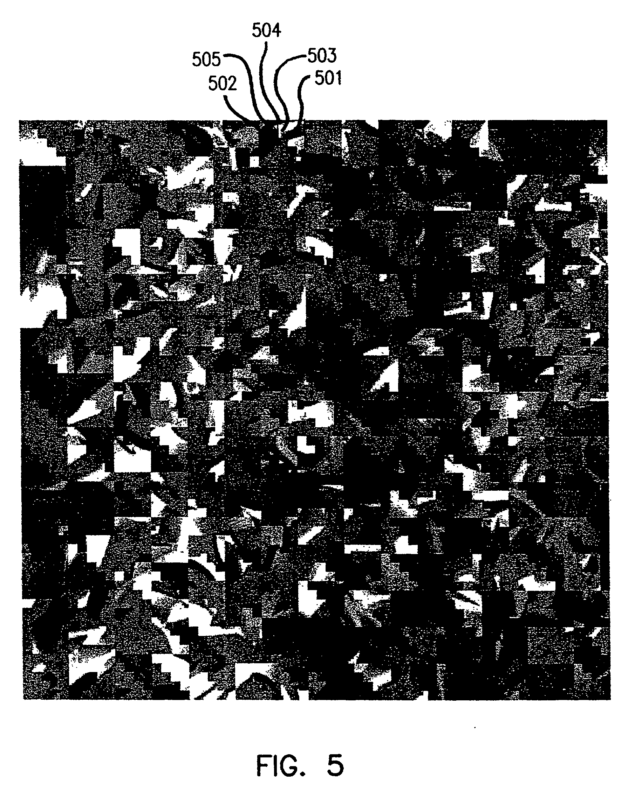

Figure 5 illustrates an example of a composite texture image created from the three-dimensional object and texture illustrated in Figures 1-3. The composite texture image is composed of texels mapped into right triangles, and rotated with respect to each other in pairs such as texels 501 and 502 to form squares. The squares formed by pairs of texels are then placed im proximity to one another to form a continuous composite texture image as shown generally in Figure 5.

In further embodiments, the texels have jagged edges 503 when rotated and placed in pairs to form squares. The jagged edges in some further embodiments are 8x8 pixels, which corresponds to the unit area upon which the popular JPEG image compression algorithm operates. The jagged edge is formed in some embodiments by mapping portions such as 504 of the texel 501 across the hypotenuse of the texel, the portions comprising 8x8 pixel right triangle portions of the texel whose hypotenuses are coincident with the hypotenuse of the texel. The portion 504 is then mirrored across the hypotenuse to form reflected portion 505, which shares both size and content of portion 504. The resulting pair of jagged-edged texels such as 501 and 502 will in such embodiments have no boundaries between texels within each 8x8 portion of the composite texture image, allowing more efficient operation of the JPEG compression algorithm and similar methods. Also, elimination of portions of multiple texels within each 8x8 image area prevents introduction of a color bias or tint from neighboring texels into compressed image region data. Copying the data from portion 504 into reflected portion 505 also creates a redundancy in data, facilitating efficient compression of the 8x8 unit formed by the two portions.

In alternate embodiments, the jagged edge is formed by sampling additional data from an adjacent texel on the original texture image, but such methods are disfavored because they may introduce unwanted additional complexity and result in less efficient compression. In still other embodiments, the reflected portion 505 may instead comprise an area filled by a solid color, reducing the complexity of the resulting 8x8 image area.

In rendering the object, the reflected portions 505 or corresponding image portions utilized to reduce complexity within 8x8 areas of the image are discarded, and only the original texel data is mapped onto the triangle mesh. The reflected portions or corresponding portions are used only to facilitate efficient and color-accurate compression of the composite texture map and thereby reduce the storage and bandwidth needed to store or transmit the three-dimensional object.

It is anticipated that this invention may be suitably applied to polygon meshes in two or three dimensions other than triangle meshes, and will result in similar benefits. This invention further is not limited in scope by the examples given here. Although specific embodiments have been illustrated and described herein, it will be appreciated by those of ordinary skill in the art that any arrangement which is calculated to achieve the same purpose may be substituted for the specific embodiments shown. This application is intended to cover any adaptations or variations of the invention. It is intended that this invention be limited only by the claims, and the full scope of equivalents thereof.

Further, the computer program for carrying out the above method can be obtained in electronic form for example by downloading the code over a network such as the internet. Thus in accordance with another aspect of the present invention there is provided an electrical signal carrying processor implementable instructions for controlling a processor to carry out the method as hereinbefore described.

## Claims

1. A method of compressing a texture map, comprising:
determining the complexity of each polygon texture from a texture-mapped image;
combining textures of similar complexity into a two-dimensional composite texture image; and
compressing each composite texture image.

2. The method of claim 1, further comprising creating a map of each composite texture image, the map comprising a polygon mesh location of each polygon texture present in the composite texture image.

3. The method of claim 1, further comprising:
removing duplicate polygon textures that are very similar to an original polygon texture in the same texture-mapped image; and
mapping the original polygon texture in place of the removed duplicate polygon textures.

4. The method of claim 1, further comprising determining a compression level for each of the composite texture images based on the complexity of each composite texture image.

5. The method of claim 1, further comprising determining a resolution for each of the composite texture images based on the complexity of each composite texture image.

6. The method of claim 1, wherein determining the complexity of each polygon texture comprises determination of the degree of color change between pixels in a predetermined area of the polygon texture.

7. The method of claim 1, wherein determining the complexity of each polygon texture comprises determination of the number of times pixel color changes in a predetermined area of the polygon texture.

8. The method of claim 1, wherein determining the complexity of each polygon texture comprises determination of edge boundaries within a predetermined area of the polygon texture.

9. The method of claim 1, wherein combining textures of similar complexity into a two-dimensional composite texture image comprises resampling each texture to a right triangle shape.

10. The method of claim 9, wherein combining textures of similar complexity further comprises orienting selected right triangles rotated half a rotation with respect to each other and placing them in proximity with each other within the composite texture image to form a square.

11. The method of claim 10, wherein the selected textures in a composite texture image are selected by size in orienting and placing the selected right triangles with respect to each other to form a square.

12. The method of claim 11, wherein the selected right triangles oriented and placed to approximate a square comprise right triangles having a jagged hypotenuse formed by eight pixel-by-eight pixel square portions of the texture, the edges of the square portions oriented parallel to the two sides of the right triangle other than the hypotenuse.

13. The method of claim 12, wherein the eight pixel-by-eight pixel square portions of the texture forming the jagged hypotenuse comprise a smaller right triangle and a reflected image of the smaller right triangle joined along their hypotenuses.

14. A method of rendering a texture-mapped three dimensional polygon mesh image, comprising:
loading polygon textures from a compressed composite texture image;
loading map data indicating a polygon mesh location of each polygon texture present in the composite texture image;
rendering a three-dimensional mesh; and
rendering the polygon textures onto the three-dimensional mesh locations indicated by the map data.

15. A machine-readable medium with instructions thereon, the instructions when executed operable to cause a computer to:
determine the complexity of each polygon texture from a texture-mapped image;
combine textures of similar complexity into a two-dimensional composite texture image; and
compress each composite texture image.

16. The machine-readable medium of claim 15, the instructions further operable to cause a computer to create a map of each composite texture image, the map comprising the mesh location of each polygon texture present in the composite texture image.

17. The machine-readable medium of claim 15, the instructions further operable to cause a computer to:
remove duplicate polygon textures that are very similar to an original polygon texture in the same texture-mapped image; and
map the original polygon texture in place of the removed duplicate polygon textures.

18. The machine-readable medium of claim 15, the instructions further operable to cause a computer to determine a compression level for each of the composite texture images based on the complexity of each composite texture image.

19. The machine-readable medium of claim 15, the instructions further operable to cause a computer to determine a resolution for each of the composite texture images based on the complexity of each composite texture image.

20. The machine-readable medium of claim 15, wherein determining the complexity of each polygon texture comprises determination of the degree of color change between pixels in a predetermined area of the polygon texture.

21. The machine-readable medium of claim 15, wherein determining the complexity of each polygon texture comprises determination of the number of times pixel color changes in a predetermined area of the polygon texture.

22. The machine-readable medium of claim 15, wherein determining the complexity of each polygon texture comprises determination of edge boundaries within a predetermined area of the polygon texture.

23. The machine-readable medium of claim 15, wherein combining textures of similar complexity into a two-dimensional composite texture image comprises resampling each texture to a right triangle shape.

24. The machine-readable medium of claim 23, wherein combining textures of similar complexity further comprises orienting selected right triangles rotated half a rotation with respect to each other and placing them in proximity with each other within the composite texture image to densely fill the composite image.

25. The machine-readable medium of claim 24, wherein the selected textures in a composite texture image are selected by size in the orienting and placing the selected right triangles with respect to each other to densely fill the composite image.

26. The machine-readable medium of claim 24, wherein the selected right triangles oriented and placed to densely fill the composite image comprise right triangles having a jagged hypotenuse formed by eight pixel-by-eight pixel square portions of the texture, the edges of the square portions oriented parallel to the two sides of the right triangle other than the hypotenuse.

27. The machine-readable medium of claim 26, wherein the eight pixel-by-eight pixel square portions of the texture forming the jagged hypotenuse comprise a smaller right triangle and a reflected image of the smaller right triangle joined along their hypotenuses.

28. A machine-readable medium with instructions thereon, the instructions when executed operable to cause a computer to:
load polygon textures from a compressed composite texture image;
load map data indicating the mesh location of each polygon texture present in the composite texture image;
render a three-dimensional mesh; and
render the polygon textures onto the three-dimensional mesh locations indicated by the map data.

29. A machine-readable medium having a data structure stored thereon, the data structure comprising:
a first data field containing one or more compressed composite texture images that comprise polygon textures of a three-dimensional image; and
a second field containing map data indicating the location of each polygon texture stored in the first data field within the three-dimensional image.

30. The machine-readable medium of claim 29 having a data structure stored thereon, the data structure further comprising a third data field containing data representing a three-dimensional mesh of polygons upon which the polygon textures are rendered.

31. A method as claimed in any of claims 1 to 14 wherein each step of said method is performed by a computer.

32. A system for processing data representative of a three dimensional image, comprising means for analysing the data to determine the complexity of each of a set of data elements corresponding to respective elements of the image, grouping the data elements into groups of similar complexity, and compressing data comprising the combined data elements of each group to obtain compressed data representative of the image.

33. An electrical signal carrying processor implementable instructions for controlling a processor to carry out the method of any one of claims 1 to 14.
